# EUROPEAN PATENT SPECIFICATION

(11) **EP 2 232 821 B1**
(45) Date of publication and mention of the grant of the patent: **02.09.2015**
(21) Application number: 08700596.3
(22) Date of filing: 04.01.2008
(51) Int. Cl.: H04W 28/06, H04L 29/06, H04L 29/08

(54) **TRANSMISSION METHOD, NETWORK EQUIPMENT, USER EQUIPMENT AND TELECOMMUNICATION SYSTEM**
ÜBERTRAGUNGSVERFAHREN, NETZGERÄTE, BENUTZERGERÄTE UND TELEKOMMUNIKATIONSSYSTEM
PROCÉDÉ DE TRANSMISSION, ÉQUIPEMENT DE RÉSEAU, ÉQUIPEMENT UTILISATEUR ET SYSTÈME DE TÉLÉCOMMUNICATION

(43) Date of publication of application: 29.09.2010
(73) Proprietor: ALCATEL LUCENT, 92100 Boulogne-Billancourt (FR)
(72) Inventor: FANIUOLO,Antonella, Swindon Wiltshire SN25 2AU (GB); YANG, Tao, Shanghai 201206 (CN)
(74) Representative: Wetzel, Emmanuelle
(86) International application number: PCT/CN2008/000036
(87) International publication number: WO 2009/086690

(56) References cited:
- CN-A- 1 311 590
- CN-A- 101 009 827
- US-B2- 7 277 439
- "3rd Generation Partnership Project; Technical Specification Group Radio Access Network; Evolved Universal Terrestrial Radio Access (E-UTRA) Medium Access Control (MAC) protocol specification (Release 8)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 December 2007 (2007-12-01), pages 1-21, XP050377616,
- NTT DOCOMO: "MAC PDU structure for LTE", 3GPP DRAFT; R2-072716, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Orlando, USA; 20070622, 22 June 2007 (2007-06-22), XP050135502, [retrieved on 2007-06-22]
- LG ELECTRONICS INC: "Scheduling Consideration on L2 Header", 3GPP DRAFT; R2-074235 SCHEDULING CONSIDERATION ON L2 HEADER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20071002, 2 October 2007 (2007-10-02), XP050136854, [retrieved on 2007-10-02]
- ASUSTEK: "Method for UE to request dynamic resource", 3GPP DRAFT; R2-074519 METHOD FOR UE TO REQUEST DYNAMIC RESOURCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20071017, 17 October 2007 (2007-10-17), XP050137050, [retrieved on 2007-10-17]

## Description

### FIELD OF THE INVENTION

The present invention relates to a method of transmission between network equipment and user equipment, a method of network equipment transmission, a method of user equipment reception, network equipment, user equipment and a telecommunications system.

### BACKGROUND OF THE INVENTION

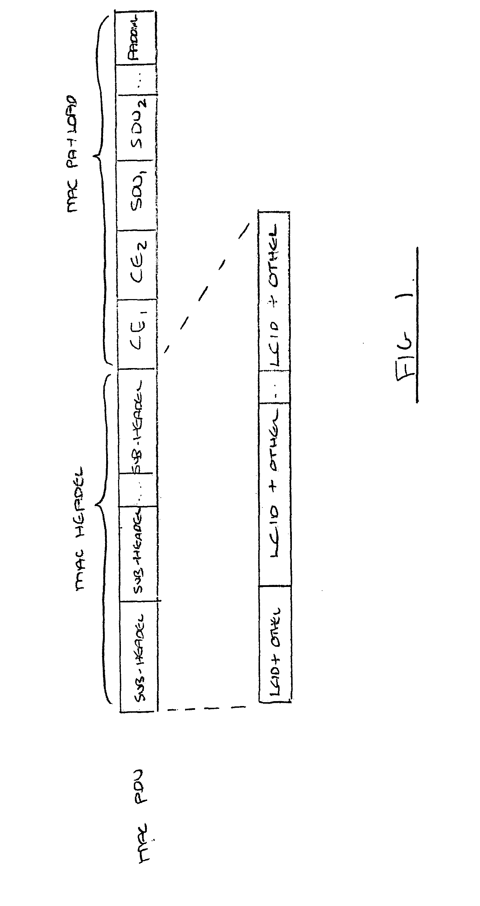

In a third generation (3G) evolved universal terrestrial radio access network (E-UTRAN) telecommunications system (as described in 3GPP specifications), a number of E-UTRAN NodeBs (eNBs) are arranged to communicate with a number of user equipment (UEs). A number of channels are provided between the eNBs and UEs to support this communication. On a downlink shared channel (DL-SCH) and an uplink shared channel (UL-SCH) information is multiplexed to enable transmission of control and traffic information between an eNB and a UE. The DL-SCH and UL-SCH carry a number of logical channels to enable a number of different applications on the UE associated with those channels to each transmit and receive control and traffic information over that channel. Accordingly, information to be transmitted over the DL-SCH is formed into a medium access control protocol data unit (MAC PDU), which consists of a MAC header and a MAC payload, as illustrated in Figure 1. The MAC header provides information on the content of the MAC payload. The MAC payload comprises a number of MAC service data units (MAC SDUs), a number of MAC control elements (MAC CEs), together with optional padding. The MAC header comprises one or more MAC PDU sub-headers, with each sub-header corresponding to either a MAC SDU, a MAC CE or padding. A MAC PDU sub-header associated with a MAC SDU, a MAC CE or padding consists of a logical channel identifier (LCID), together with other header information. The MAC PDU sub-headers, MAC SDUs, MAC CEs and padding are concatenated to create the MAC PDU. MAC CEs are placed before any MAC SDU, and padding occurs at the end of the MAC PDU. Both the MAC header and the MAC SDUs may have variable sizes. A maximum of one MAC PDU is then transmitted per transport block per user equipment. It can be seen that this enables different logical channels of information to be transmitted over the DL-SCH to enable information to be provided to different applications being executed on the user equipment.

It is desired to provide an improved technique for transmission between the eNBs and the UEs.

"3rd Generation Partnership Project; Technical Specification Group Radio Access Network; Evolved Universal Terrestrial Radio Access (E-UTRA) Medium Access Control (MAC) protocol specification (Release 8)", 3GPP Standard; 3GPP TS 36.321, 3rd Generation Partnership Project (3GPP), Mobile Competence Centre; 650 Route des Lucioles, F-06921 Sophia-Antipolis Cedex, France, no. V8.0.0, 1 December 2007 (2007-12-01), pages 1-21, XP050377616, discloses the E-UTRA MAC protocol.

NTT DOCOMO: "MAC PDU structure for LTE", 3GPP Draft; R2-072716, 3rd Generation Partnership Project (3GPP), Mobile Competence Centre; 650, Route des Lucioles; F-06921 Sophia-Antipolis Cedex; France, vol. RAN WG2, no. Orlando, USA; 20070622, 22 June 2007 (2007-06-22), XP050135502, discloses a MAC PDU structure for LTE.

LG Electronics Inc. "Scheduling Consideration on L2 Header", 3GPP Draft; R2-074235 Scheduling Consideration On L2 Header, 3rd Generation Partnership Project (3GPP), Mobile Competence Centre; 650, Route des Lucioles; F-06921 Sophia-Antipolis Cedex; France; vol. RAN WG2, no. Shanghai, China; 20071002, 2 October 2007 (2007-10-02), XP050136854, discloses scheduling considerations on L2 headers.

Asustek: "Method for UE to request dynamic resource", 3GPP Draft; R2-074519 Method for UE to request dynamic resource, 3rd Generation Partnership Project (3GPP), Mobile Competence Centre; 650, Route des Lucioles; F-06921 Sophia-Antipolis Cedex; France, vol. RAN WG2, no. Shanghai, China; 20071017, 17 October 2007 (2007-10-17); XP050137050, discloses a method for UE to request dynamic resource.

### SUMMARY OF THE INVENTION

According to a first aspect of the present invention, there is provided a method of transmission between network equipment and user equipment in which packets transmitted over a channel contain information elements which are multiplexed in accordance with a predetermined format in which each information element has an identifier which identifies that information element within that packet, the method comprising the steps of: determining that a packet to be transmitted over the channel will not contain more than one information element; transmitting an indicator between the network equipment and the user equipment to indicate that the packet to be transmitted over the channel will be encoded with a revised format in which no identifiers are provided; transmitting a packet over the channel encoded with the revised format with any identifiers omitted; and decoding the packet received over the data channel in accordance with the revised format to extract the information element.

The first aspect recognises that there are certain circumstances where only one information element will be transmitted from the network equipment to the user equipment within a packet such as, for example, a MAC PDU. However, even when transmitting just one information element such as, for example, a MAC SDU, the MAC PDU still requires a sub-header containing the LCID. The first aspect also recognises that in these circumstances an indicator such as, for example, a control message will be provided on a control channel and that this indicator can be used to indicate to the user equipment that this particular type of message is being transmitted.

Accordingly, a determination is made that a packet which will be transmitted over the channel will be one that contains only one information element. An indicator is then transmitted which indicates that a packet with just one information element is to be transmitted, and therefore that packet can be transmitted with a revised format where no identifier is included. The packet is then transmitted over the channel without the identifier. The packet can then be decoded since it is known from the identifier that the packet is provided in the revised format. The information element can then be extracted. Accordingly, it can be seen that the packet can be transmitted without the identifier and the information element can still be extracted. This reduces the size of the packet and saves the additional overhead which would otherwise be incurred by including the identifier.

In one embodiment, the step of determining comprises receiving at the network equipment a random access preamble from the user equipment, the step of transmitting an indicator comprises transmitting from the network equipment to the user equipment a random access radio network temporary identifier, the step of transmitting a packet comprises transmitting from the network equipment to the user equipment a modified medium access control protocol data unit containing a random access response as the information element and the step of decoding comprises signalling to a medium access control layer of the user equipment that the modified medium access control protocol data unit is encoded with the revised format to extract the random access response.

A random access response is one particular example where the LCID may be omitted from the MAC PDU. On receipt of a random access request, the network equipment, such as an eNB, will determine that the MAC PDU will only contain a random access response and therefore it is unnecessary to include a LCID. Hence, the network equipment transmits a random access radio network temporary identifier (RA-RNTI) to the user equipment. Receipt of this identifier indicates to the user equipment that the MAC PDU is modified to contain no LCID. Accordingly, on receipt of the modified MAC PDU the user equipment indicates from a physical layer to the MAC protocol layer that a modified MAC PDU has been received which is encoded with the revised format in which no LCID is included. This then enables the MAC protocol layer to extract the random access response from the modified MAC PDU correctly. In this way, it can be seen that the need to include the LCID in the MAC PDU is obviated, thereby reducing overhead.

In one embodiment, the step of determining comprises initiating a broadcast channel transmission, the step of transmitting an indicator comprises transmitting from the network equipment to the user equipment a broadcast control channel radio network temporary identifier, the step of transmitting a packet comprises transmitting from the network equipment to the user equipment a modified medium access control protocol data unit containing broadcast information as the information element and the step of decoding comprises signalling to a medium access control layer of the user equipment that the modified medium access control protocol data unit is encoded with the revised format to extract the broadcast information.

Similarly, transmitting broadcast information is another particular example where the LCID may be omitted from the MAC PDU. The network equipment, such as an eNB, will determine that the MAC PDU will only contain a broadcast information and therefore it is unnecessary to include a LCID. The network equipment transmits a broadcast control channel radio network temporary identifier (BCCH-RNTI). Upon receipt of the BCCH-RNTI user equipment determines that a modified MAC PDU will be received which contains no LCID. Accordingly, on receipt of the modified MAC PDU the user equipment indicates from a physical layer to the MAC protocol layer that a modified MAC PDU has been received which is encoded with the revised format in which no LCID is included. This then enables the MAC protocol layer to extract the broadcast information from the modified MAC PDU correctly. In this way, it can be seen that the need to include the LCID in the MAC PDU is obviated, thereby reducing overheads.

In one embodiment, the step of determining comprises initiating a paging channel transmission, the step of transmitting an indicator comprises transmitting from the network equipment to the user equipment a paging control channel radio network temporary identifier, the step of transmitting a packet comprises transmitting from the network equipment to the user equipment a modified medium access control protocol data unit containing paging information as the information element and the step of decoding comprises signalling to a medium access control layer of the user equipment that the modified medium access control protocol data unit is encoded with the revised format to extract the paging information.

Likewise, transmitting paging information is yet another particular example where the LCID may be omitted from the MAC PDU. The network equipment, such as an eNB, will determine that the MAC PDU will only contain a paging information and therefore it is unnecessary to include a LCID. The network equipment transmits a paging control channel radio network temporary identifier (PCCH-RNTI). Upon receipt of the PCCH-RNTI user equipment determines that a modified MAC PDU will be received which contains no LCID. Accordingly, on receipt of the modified MAC PDU the user equipment indicates from a physical layer to the MAC protocol layer that a modified MAC PDU has been received which is encoded with the revised format in which no LCID is included. This then enables the MAC protocol layer to extract the paging information from the modified MAC PDU correctly. In this way, it can be seen that the need to include the LCID in the MAC PDU is obviated, thereby reducing overheads.

According to a second aspect of the present invention, there is provided a method of network equipment transmission in which packets transmitted over a channel to user equipment contain information elements which are multiplexed in accordance with a predetermined format in which each information element has an identifier which identifies that information element within that packet, the method comprising the steps of: determining in the network equipment that a packet to be transmitted over the channel will not contain more than one information element; transmitting an indicator to indicate that the packet to be transmitted over the channel will be encoded with a revised format in which no identifiers are provided; and transmitting a packet over the channel encoded with the revised format with any identifiers omitted.

In one embodiment, the step of determining comprises receiving at the network equipment a random access preamble from the user equipment, the step of transmitting an indicator comprises transmitting from the network equipment to the user equipment a random access radio network temporary identifier, and the step of transmitting a packet comprises transmitting from the network equipment to the user equipment a modified medium access control protocol data unit containing a random access response as the information element.

In one embodiment, the step of determining comprises initiating a broadcast channel transmission, the step of transmitting an indicator comprises transmitting from the network equipment to the user equipment a broadcast control channel radio network temporary identifier, and the step of transmitting a packet comprises transmitting from the network equipment to the user equipment a modified medium access control protocol data unit containing broadcast information as the information element.

In one embodiment, the step of determining comprises initiating a paging channel transmission, the step of transmitting an indicator comprises transmitting from the network equipment to the user equipment a paging control channel radio network temporary identifier, and the step of transmitting a packet comprises transmitting from the network equipment to the user equipment a modified medium access control protocol data unit containing paging information as the information element.

According to an example, there is provided a method of user equipment reception in which packets received over a channel from network equipment contain information elements which are multiplexed in accordance with a predetermined format in which each information element has an identifier which identifies that information element within that packet, the method comprising the steps of: receiving an indicator which indicates that the packet to be transmitted over the channel will be encoded with a revised format in which no identifiers are provided; receiving a packet over the channel encoded with the revised format with any identifiers omitted; and decoding the packet received over the data channel in accordance with the revised format to extract the information element.

In one embodiment, the step of receiving an indicator comprises receiving from the network equipment a random access radio network temporary identifier, the step of receiving a packet comprises receiving from the network equipment a modified medium access control protocol data unit containing a random access response as the information element, and the step of decoding comprises signalling to a medium access control layer of the user equipment that the modified medium access control protocol data unit is encoded with the revised format to extract the random access response.

In one embodiment, the step of receiving an indicator comprises receiving from the network equipment a broadcast control channel radio network temporary identifier, the step of receiving a packet comprises receiving from the network equipment a modified medium access control protocol data unit containing broadcast information as the information element, and the step of decoding comprises signalling to a medium access control layer of the user equipment that the modified medium access control protocol data unit is encoded with the revised format to extract the broadcast information.

In one embodiment, the step of receiving an indicator comprises receiving from the network equipment a paging control channel radio network temporary identifier, the step of receiving a packet comprises receiving from the network equipment a modified medium access control protocol data unit containing paging information as the information element, and the step of decoding comprises signalling to a medium access control layer of the user equipment that the modified medium access control protocol data unit is encoded with the revised format to extract the paging information

In one embodiment, the network equipment is an evolved universal terrestrial radio access network node B, the channel is a downlink shared channel.

According to a fourth aspect of the present invention there is provided network equipment for transmitting packets to user equipment over a channel, the packets containing information elements which are multiplexed in accordance with a predetermined format in which each information element has an identifier which identifies that information element within that packet, the network equipment comprising: determining means operable to determine that a packet to be transmitted over the channel will not contain more than one information element; and transmitting means operable to transmit an indicator between the network equipment and the user equipment to indicate that the packet to be transmitted over the channel will be encoded with a revised format in which no identifiers are provided, and to transmit a packet over the channel encoded with the revised format with any identifiers omitted.

In one embodiment, the determining means is operable to receive a random access preamble from the user equipment, the transmitting means is operable transmit to the user equipment a random access radio network temporary identifier as the indicator, and to transmit to the user equipment a modified medium access control protocol data unit as the packet, the modified medium access control protocol data unit containing a random access response as the information element.

In one embodiment, the transmitting means is operable to transmit to the user equipment a broadcast control channel radio network temporary identifier as the indicator, and to transmit to the user equipment a modified medium access control protocol data unit as the packet, the modified medium access control protocol data unit containing broadcast information as the information element.

According to an example, the transmitting means is operable to transmit to the user equipment a paging control channel radio network temporary identifier as the indicator, and to transmit to the user equipment a modified medium access control protocol data unit as the packet, the modified medium access control protocol data unit containing paging information as the information element.

According to a fifth aspect of the present invention, there is provided user equipment for receiving packets from network equipment over a channel, the packets containing information elements which are multiplexed in accordance with a predetermined format in which each information element has an identifier which identifies that information element within that packet, the user equipment comprising: reception means operable to receive an indicator transmitted between the network equipment and the user equipment which indicates that the packet to be transmitted over the channel will be encoded with a revised format in which no identifiers are provided, and to receive a packet over the channel encoded with the revised format; and decoding means operable to decode the packet received over the data channel in accordance with the revised format to extract the information element.

In one embodiment, the reception means is operable to receive from the network equipment a random access radio network temporary identifier as the indicator and to receive from the network equipment a modified medium access control protocol data unit as the packet, the modified medium access control protocol data unit containing a random access response as the information element, and the decoding means is operable to signal a medium access control layer that the modified medium access control protocol data unit is encoded with the revised format to extract the random access response.

According to an example, the reception means is operable to receive from the network equipment a broadcast control channel radio network temporary identifier as the indicator and to receive from the network equipment a modified medium access control protocol data unit as the packet, the modified medium access control protocol data unit containing broadcast information as the information element, and the decoding means is operable to signal to a medium access control layer that the modified medium access control protocol data unit is encoded with the revised format to extract the broadcast information.

According to an example, the reception means is operable to receive from the network equipment a paging control channel radio network temporary identifier as the indicator and to receive from the network equipment a modified medium access control protocol data unit as the packet, the modified medium access control protocol data unit containing paging information as the information element, and the decoding means is operable to signal a medium access control layer that the modified medium access control protocol data unit is encoded with the revised format to extract the paging information.

According to a sixth aspect of the present invention, there is provided a telecommunications system, comprising at least one network equipment according to the fourth aspect and at least one user equipment according to the fifth aspect.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will be described further, with reference to the accompanying drawings, in which:
Figure 1 illustrates a MAC PDU;
Figure 2 illustrates the operation of an E-UTRAN NodeB and user equipment during a random access event according to one embodiment;
Figure 3 illustrates interaction between an E-UTRAN NodeB and user equipment during a broadcast event according to one embodiment; and
Figure 4 illustrates interaction between an E-UTRAN NodeB and user equipment during a paging event according to one embodiment.

### DESCRIPTION OF THE EMBODIMENTS

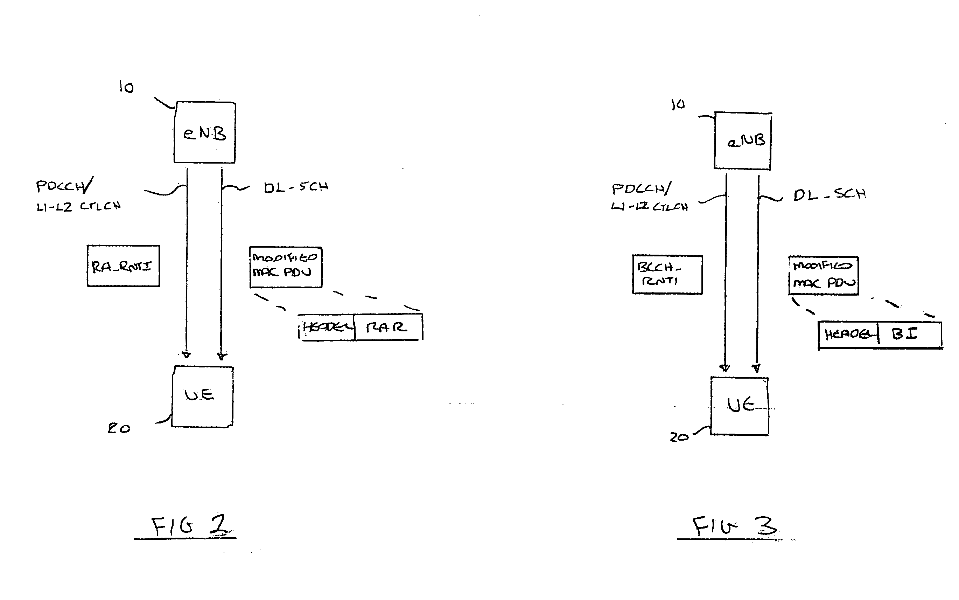

Figure 2 illustrates the operation of an eNB 10 and user equipment 20 of an E-UTRAN telecommunications system during a random access event according to one embodiment. The eNB 10 receives from the UE 20 a random access preamble on the random access channel (RACH). The eNB 10 transmits a RA-RNTI over the physical downlink control channel (PDCCH) - the L1-L2 control channel - to the UE 20. Because the eNB 10 realises that the associated information to be transmitted on the DL-SCH will not be multiplexed with anything else it is able to transmit that information using a modified MAC PDU in which the LCID is omitted. Accordingly, the eNB 10 transmits the random access response (RAR) as a MAC CE or MAC SDU in which the MAC PDU sub-header associated with that MAC CE or MAC SDU does not include an LCID. This modified MAC PDU is then transmitted over the DL-SCH to the UE 20. The RAR may or may not include a header.

The UE 20, on receipt of a RA-RNTI over the PDCCH (L1-L2 control channel), recognises that this signal indicates that a modified MAC PDU will be received on the DL-SCH. Accordingly, the UE 20 internally instructs its MAC protocol level to decode the packet received over the DL-SCH as a modified MAC PDU. In this way, the RAR can then be extracted from the modified MAC PDU.

Figure 3 illustrates the operation of an eNB 10 and user equipment 20 of an E-UTRAN telecommunications system during a broadcast event according to one embodiment. When a broadcast is to take place, the eNB 10 transmits a BCCH-RNTI over the physical downlink control channel (PDCCH) - the L1-L2 control channel - to the UE 20. Because the eNB 10 realises that the associated information to be transmitted on the DL-SCH will not be multiplexed with anything else it is able to transmit that information using a modified MAC PDU in which the LCID is omitted. Accordingly, the eNB 10 transmits the broadcast information as a MAC CE or MAC SDU in which the MAC PDU sub-header associated with that MAC CE or MAC SDU does not include an LCID. This modified MAC PDU is then transmitted over the DL-SCH to the UE 20. The broadcast information may or may not include a header.

The UE 20, on receipt of a BCCH-RNTI over the PDCCH (L1-L2 control channel), recognises that this signal indicates that a modified MAC PDU will be received on the DL-SCH. Accordingly, the UE 20 internally instructs its MAC protocol level to decode the packet received over the DL-SCH as a modified MAC PDU. In this way, the broadcast can then be extracted from the modified MAC PDU.

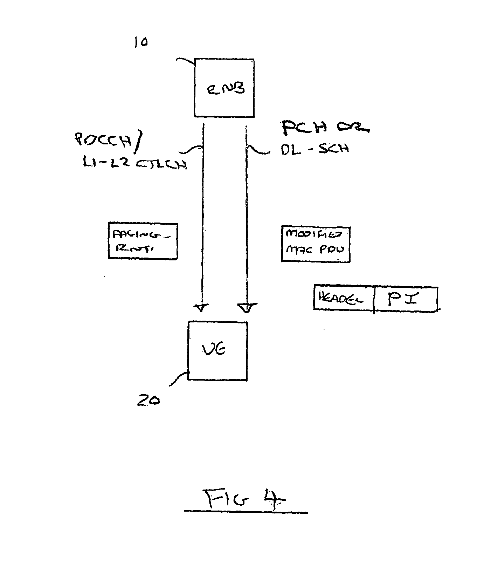

Figure 4 illustrates the operation of an eNB 10 and user equipment 20 of an E-UTRAN telecommunications system during a paging event according to one embodiment. When paging is to take place, the eNB 10 transmits a paging identifier (paging_RNTI) over physical downlink control channel (PDCCH) - the L1-L2 control channel - to the UE 20. Because the eNB 10 realises that the associated information to be transmitted on the DL-SCH or the paging channel (PCH) will not be multiplexed with anything else it is able to transmit that information using a modified MAC PDU in which the LCID is omitted. Accordingly, the eNB 10 transmits the paging information as a MAC CE or MAC SDU in which the MAC PDU sub-header associated with that MAC CE or MAC SDU does not include an LCID. This modified MAC PDU is then transmitted over the DL-SCH or PCH to the UE 20.

The UE 20, on receipt of the paging_RNTI over the PDCCH, recognises that this signal indicates that a modified MAC PDU will be received on the DL-SCH or PCH. Accordingly, the UE 20 internally instructs its MAC protocol level to decode the packet received over the DL-SCH or PCH as a modified MAC PDU. In this way, the paging information can then be extracted from the modified MAC PDU.

Hence, in certain circumstances, a message is used on a control channel to address the UE 20 and to indicate to the UE 20 the presence of a modified MAC PDU on a data channel. An internal interaction between the physical and MAC protocol layers of the UE 20 informs the MAC protocol layer of the presence of a modified MAC PDU. This internal interaction is triggered by the message on the control channel. Because the message sent over the data channel is not multiplexed with other messages at the MAC layer, the LCID is not needed to multiplex and address messages to the right entity or different logical channels. The result is an optimised format for some MAC PDU messages.

Accordingly, it can be seen that a transmission can be made between the eNB 10 and the UE 20 over the DL-SCH using a modified MAC PDU without the need to include an LCID. This reduces transmission overheads.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims and their equivalents.

## Claims

1. A method of transmission between network equipment (10) and user equipment (20) in which packets transmitted over a channel contain information elements which are multiplexed in accordance with a predetermined format in which each information element has an identifier which identifies that information element within that packet, the method comprising the steps of: determining that a packet to be transmitted over the channel will not contain more than one information element; transmitting an indicator between the network equipment (10) and the user equipment (20) to indicate that the packet to be transmitted over the channel will be encoded with a revised format in which no identifiers are provided; transmitting a packet over the channel encoded with the revised format with any identifiers omitted; and decoding the packet received over the data channel in accordance with the revised format to extract the information element.

2. The method of claim 1 , wherein the step of determining comprises receiving at the network equipment (10) a random access preamble from the user equipment (20), the step of transmitting an indicator comprises transmitting from the network equipment (10) to the user equipment (20) a random access radio network temporary identifier, the step of transmitting a packet comprises transmitting from the network equipment to the user equipment a modified medium access control protocol data unit containing a random access response as the information element and the step of decoding comprises signalling to a medium access control layer of the user equipment that the modified medium access control protocol data unit is encoded with the revised format to extract the random access response.

3. The method of claim 1 , wherein the step of determining comprises initiating a broadcast channel transmission, the step of transmitting an indicator comprises transmitting from the network equipment to the user equipment a broadcast control channel radio network temporary identifier, the step of transmitting a packet comprises transmitting from the network equipment to the user equipment a modified medium access control protocol data unit containing broadcast information as the information element and the step of decoding comprises signalling to a medium access control layer of the user equipment that the modified medium access control protocol data unit is encoded with the revised format to extract the broadcast information.

4. The method of claim 1 , wherein the step of determining comprises initiating a paging channel transmission, the step of transmitting an indicator comprises transmitting from the network equipment to the user equipment a paging control channel radio network temporary identifier, the step of transmitting a packet comprises transmitting from the network equipment to the user equipment a modified medium access control protocol data unit containing paging information as the information element and the step of decoding comprises signalling to a medium access control layer of the user equipment that the modified medium access control protocol data unit is encoded with the revised format to extract the paging information.

5. The method of any preceding claim, wherein the network equipment (10) is an evolved universal terrestrial radio access network node B and the channel is a downlink shared channel.

6. Network equipment (10) for transmitting packets to user equipment over a channel, the packets containing information elements which are multiplexed in accordance with a predetermined format in which each information element has an identifier which identifies that information element within that packet, the network equipment comprising:
determining means operable to determine that a packet to be transmitted over the channel will not contain more than one information element; and transmitting means operable to transmit an indicator between the network equipment and the user equipment to indicate that the packet to be transmitted over the channel will be encoded with a revised format in which no identifiers are provided, and to transmit a packet over the channel encoded with the revised format with any identifiers omitted.

7. User equipment (20) for receiving packets from network equipment over a channel, the packets containing information elements which are multiplexed in accordance with a predetermined format in which each information element has an identifier which identifies that information element within that packet, the user equipment comprising: reception means operable to receive an indicator transmitted between the network equipment and the user equipment which indicates that the packet to be transmitted over the channel will be encoded with a revised format in which no identifiers are provided, and to receive a packet over the channel encoded with the revised format; and decoding means operable to decode the packet received over the data channel in accordance with the revised format to extract the information element.

8. A telecommunications system, comprising at least one network equipment as claimed in claim 6 and at least one user equipment as claimed in claim 7.

## Patentansprüche

1. Übertragungsverfahren zwischen Netzgeräten (10) und Benutzergeräten (20), wobei Pakete, die über einen Kanal übertragen werden, Informationselemente enthalten, die gemultiplext werden gemäß einem vorausbestimmten Format, wobei jedes Informationselement einen Identifikator aufweist, der dieses Informationselement innerhalb dieses Pakets identifiziert, wobei das Verfahren folgende Schritte umfasst: Bestimmen, dass ein über den Kanal zu übertragendes Paket nicht mehr als ein Informationselement enthalten wird; Übertragen eines Indikators zwischen den Netzgeräten (10) und den Benutzergeräten (20) um anzuzeigen, dass das über den Kanal zu übertragende Paket mit einem überarbeiteten Format codiert werden wird, in dem keine Identifikatoren bereitgestellt werden; Übertragen eines Pakets über den Kanal, das mit dem überarbeiteten Format, mit jeglichen Identifikatoren weggelassen, codiert ist; und Decodieren des über den Datenkanal empfangenen Pakets gemäß dem überarbeiteten Format, um das Informationselement zu extrahieren.

2. Verfahren nach Anspruch 1, wobei der Schritt des Bestimmens das Empfangen einer Direktzugriffspräambel am Netzgerät (10) vom Benutzergerät (20) umfasst, der Schritt des Übertragens eines Indikators das Übertragen eines temporären Identifikators eines Direktzugriffsfunknetzes vom Netzgerät (10) an das Benutzergerät (20) umfasst, der Schritt des Übertragens eines Pakets das Übertragen einer modifizierten Medienzugangsverfahren-Protokolldateneinheit, die eine Direktzugriffsantwort als das Informationselement enthält, vom Netzgerät an das Benutzergerät umfasst, und der Schritt des Decodierens das Melden an eine Medienzugangsverfahrensschicht des Benutzergeräts umfasst, dass die modifizierte Medienzugangsverfahren-Protokolldateneinheit mit dem überarbeiteten Format codiert ist, um die Direktzugriffsantwort zu extrahieren.

3. Verfahren nach Anspruch 1, wobei der Schritt des Bestimmens das Auslösen einer Broadcast-Kanalübertragung umfasst, der Schritt des Übertragens eines Indikators das Übertragen eines temporären Identifikators eines Broadcast-Kontrollkanal-Funknetzes vom Netzgerät an das Benutzergerät umfasst, der Schritt des Übertragens eines Pakets das Übertragen einer modifizierten Medienzugangsverfahren-Protokolldateneinheit, die eine Broadcast-Information als das Informationselement enthält, vom Netzgerät an das Benutzergerät umfasst, und der Schritt des Decodierens das Melden an eine Medienzugangsverfahrensschicht des Benutzergeräts umfasst, dass die modifizierte Medienzugangsverfahren-Protokolldateneinheit mit dem überarbeiteten Format codiert ist, um die Broadcast-Information zu extrahieren.

4. Verfahren nach Anspruch 1, wobei der Schritt des Bestimmens das Auslösen einer Paging-Kanalübertragung umfasst, der Schritt des Übertragens eines Indikators das Übertragen eines temporären Identifikators eines Paging-Kontrollkanal-Funknetzes vom Netzgerät an das Benutzergerät umfasst, der Schritt des Übertragens eines Pakets das Übertragen einer modifizierten Medienzugangsverfahren-Protokolldateneinheit, die eine Paging-Information als das Informationselement enthält, vom Netzgerät an das Benutzergerät umfasst, und der Schritt des Decodierens das Melden an eine Medienzugangsverfahrensschicht des Benutzergeräts umfasst, dass die modifizierte Medienzugangsverfahren-Protokolldateneinheit mit dem überarbeiteten Format codiert ist, um die Paging-Information zu extrahieren.

5. Verfahren nach einem beliebigen vorstehenden Anspruch, wobei das Netzgerät (10) eine universelle terrestrische Funkzugangsnetz-Evolved-Node-B und der Kanal ein in Abwärtsrichtung geteilter Kanal ist.

6. Netzgerät (10) zum Übertragen von Paketen an Benutzergeräte über einen Kanal, wobei die Pakete Informationselemente enthalten, die gemultiplext werden gemäß einem vorausbestimmten Format, wobei jedes Informationselement einen Identifikator aufweist, der dieses Informationselement innerhalb dieses Pakets identifiziert, wobei das Netzgerät Folgendes umfasst: Bestimmungsmittel, die betriebsfähig sind, um zu bestimmen, dass ein über den Kanal zu übertragendes Paket nicht mehr als ein Informationselement enthalten wird; und Übertragungsmittel, die betriebsfähig sind, um einen Indikator zwischen den Netzgeräten und den Benutzergeräten zu übertragen, um anzuzeigen, dass das über den Kanal zu übertragende Paket mit einem überarbeiteten Format codiert werden wird, in dem keine Identifikatoren bereitgestellt werden, und um ein Paket über den Kanal zu übertragen, das mit dem überarbeiteten Format, mit jeglichen Identifikatoren weggelassen, codiert ist.

7. Benutzergerät (20) zum Empfangen von Paketen von Netzgeräten über einen Kanal, wobei die Pakete Informationselemente enthalten, die gemultiplext werden gemäß einem vorausbestimmten Format, wobei jedes Informationselement einen Identifikator aufweist, der dieses Informationselement innerhalb dieses Pakets identifiziert, wobei das Benutzergerät Folgendes umfasst: Empfangsmittel, die betriebsfähig sind, um einen Indikator zu empfangen, der zwischen den Netzgeräten und den Benutzergeräten übertragen wird und anzeigt, dass das über den Kanal zu übertragende Paket mit einem überarbeiteten Format codiert werden wird, in dem keine Identifikatoren bereitgestellt werden, und um ein Paket über den Kanal zu empfangen, das mit dem überarbeiteten Format codiert ist; und Decodiermittel, die betriebsfähig sind, um das über den Datenkanal empfangene Paket gemäß dem überarbeiteten Format zu decodieren, um das Informationselement zu extrahieren.

8. Telekommunikationssystem, umfassend mindestens ein Netzgerät nach Anspruch 6 und mindestens ein Benutzergerät nach Anspruch 7.

## Revendications

1. Procédé de transmission entre un équipement de réseau (10) et un équipement d'utilisateur (20) dans lequel des paquets transmis sur un canal contiennent des éléments d'information qui sont multiplexés conformément à un format prédéterminé dans lequel chaque élément d'information présente un identifiant qui identifie cet élément d'information à l'intérieur de ce paquet, le procédé comprenant les étapes suivantes : déterminer qu'un paquet à transmettre sur le canal ne contiendra pas plus d'un élément d'information ; transmettre un indicateur entre l'équipement de réseau (10) et l'équipement d'utilisateur (20) pour indiquer que le paquet à transmettre sur le canal sera codé avec un format révisé dans lequel aucun identifiant n'est fourni ; transmettre un paquet sur le canal codé avec le format révisé avec n'importe quels identifiants omis ; et décoder le paquet reçu sur le canal de données conformément au format révisé pour extraire l'élément d'information.

2. Procédé selon la revendication 1, dans lequel l'étape de détermination comprend la réception au niveau de l'équipement de réseau (10) d'un préambule d'accès aléatoire à partir de l'équipement d'utilisateur (20), l'étape de transmission d'un indicateur comprend la transmission à partir de l'équipement de réseau (10) vers l'équipement d'utilisateur (20) d'un identifiant temporaire de réseau radio d'accès aléatoire, l'étape de transmission d'un paquet comprend la transmission à partir de l'équipement de réseau vers l'équipement d'utilisateur d'une unité de données de protocole de contrôle d'accès au support modifiée contenant une réponse d'accès aléatoire en tant qu'élément d'information et l'étape de décodage comprend la signalisation à une couche de contrôle d'accès au support de l'équipement d'utilisateur que l'unité de données de protocole de contrôle d'accès au support modifiée est codée avec le format révisé pour extraire la réponse d'accès aléatoire.

3. Procédé selon la revendication 1, dans lequel l'étape de détermination comprend l'initiation d'une transmission d'un canal de diffusion, l'étape de transmission d'un indicateur comprend la transmission à partir de l'équipement de réseau vers l'équipement d'utilisateur d'un identifiant temporaire de réseau radio d'un canal de contrôle de diffusion, l'étape de transmission d'un paquet comprend la transmission à partir de l'équipement de réseau vers l'équipement d'utilisateur d'une unité de données de protocole de contrôle d'accès au support modifiée contenant des informations de diffusion en tant qu'élément d'information et l'étape de décodage comprend la signalisation à une couche de contrôle d'accès au support de l'équipement d'utilisateur que l'unité de données de protocole de contrôle d'accès au support modifiée est codée avec le format révisé pour extraire les informations de diffusion.

4. Procédé selon la revendication 1, dans lequel l'étape de détermination comprend l'initiation d'une transmission d'un canal de radiomessagerie, l'étape de transmission d'un indicateur comprend la transmission à partir de l'équipement de réseau vers l'équipement d'utilisateur d'un identifiant temporaire de réseau radio d'un canal de contrôle de radiomessagerie, l'étape de transmission d'un paquet comprend la transmission à partir de l'équipement de réseau vers l'équipement d'utilisateur d'une unité de données de protocole de contrôle d'accès au support modifiée contenant des informations de radiomessagerie en tant qu'élément d'information et l'étape de décodage comprend la signalisation à une couche de contrôle d'accès au support de l'équipement d'utilisateur que l'unité de données de protocole de contrôle d'accès au support modifiée est codée avec le format révisé pour extraire les informations de radiomessagerie.

5. Procédé selon l'une quelconque des revendications précédentes, dans lequel l'équipement de réseau (10) est un noeud B de réseau d'accès radio terrestre universel évolué et le canal est un canal partagé de liaison descendante.

6. Équipement de réseau (10) pour transmettre des paquets à l'équipement d'utilisateur sur un canal, les paquets contenant des éléments d'information qui sont multiplexés conformément à un format prédéterminé dans lequel chaque élément d'information présente un identifiant qui identifie cet élément d'information à l'intérieur de ce paquet, l'équipement de réseau comprenant : des moyens de détermination permettant de déterminer qu'un paquet à transmettre sur le canal ne contiendra pas plus d'un élément d'information ; et des moyens de transmission permettant de transmettre un indicateur entre l'équipement de réseau et l'équipement d'utilisateur pour indiquer que le paquet à transmettre sur le canal sera codé avec un format révisé dans lequel aucun identifiant n'est fourni, et pour transmettre un paquet sur le canal codé avec le format révisé avec n'importe quels identifiants omis.

7. Équipement d'utilisateur (20) pour recevoir des paquets à partir de l'équipement de réseau sur un canal, les paquets contenant des éléments d'information qui sont multiplexés conformément à un format prédéterminé dans lequel chaque élément d'information présente un identifiant qui identifie cet élément d'information à l'intérieur de ce paquet, l'équipement d'utilisateur comprenant : des moyens de réception permettent de recevoir un indicateur transmis entre l'équipement de réseau et l'équipement d'utilisateur qui indiquent que le paquet à transmettre sur le canal sera codé avec un format révisé dans lequel aucun identifiant n'est fourni, et de recevoir un paquet sur le canal codé avec le format révisé ; et des moyens de décodage permettant de décoder le paquet reçu sur le canal de données conformément au format révisé pour extraire l'élément d'information.

8. Système de télécommunication, comprenant au moins un équipement de réseau selon la revendication 6 et au moins un équipement d'utilisateur selon la revendication 7.
